# EUROPÄISCHE PATENTSCHRIFT

(11) **EP 3 541 148 B1**
(45) Veröffentlichungstag und Bekanntmachung des Hinweises auf die Patenterteilung: **04.08.2021**
(21) Anmeldenummer: 19162765.2
(22) Anmeldetag: 14.03.2019
(51) Int. Cl.: H05B 45/00, H05B 47/19, H04B 5/00, F21V 23/00

(54) **PARAMETRIERBARE LEUCHTE MIT EINEM LED-MODUL UND EINEM NFC-FÄHIGEM SPEICHERMODUL**
PARAMETERIZABLE LAMP WITH AN LED MODULE AND A NFC STORAGE MODULE
LAMPE PARAMÉTRABLE AVEC UN MODULE DE DEL ET UN MODULE DE MÉMOIRE À FONCTION DE COMMUNICATION EN CHAMP PROCHE

(30) Priorität: 14.03.2018 DE 102018105930
(43) Veröffentlichungstag der Anmeldung: 18.09.2019
(73) Patentinhaber: SITECO GmbH, 83301 Traunreut (DE)
(72) Erfinder: Rhein, Markus, 83329 Otting (DE); Strübl, Robert, 83374 Traunwalchen (DE); Bornemann, Lars, 83254 Breitbrunn (DE)
(74) Vertreter: Schmidt, Steffen

(56) Entgegenhaltungen:
- EP-A1- 3 086 624
- WO-A1-2015/025267
- CA-A1- 2 978 550
- DE-A1-102015 105 466
- DE-A1-102015 223 884

## Beschreibung

Die vorliegende Erfindung betrifft eine parametrierbare Leuchte mit einem LED-Modul und einem Speichermodul, welches für eine Near-Field-Communication, NFC, eingerichtet ist, um die Parametrierdaten in dem Speicher der Leuchte zu ändern.

Im Stand der Technik sind Leuchten mit LED-Modulen bekannt, welche ferner ein elektronisches Vorschaltgerät, EVG, aufweisen, um das LED-Modul elektrisch zu versorgen.

Das EVG kann auf den bestimmten Typ des LED-Moduls abgestimmt sein. Alternativ ist es auch möglich, eine Parametrierung des in der Leuchte verbauten EVG vorzunehmen. Diese Parametrierung kann drahtgebunden, z.B. durch einen herstellerspezifischen Datenbus erfolgen. Die drahtgebundene Parametrierung ist jedoch aufwendig und in der Regel nur beim Hersteller möglich. Um kundenseitig Parametrierdaten zu ändern, wäre es notwendig, dass der Kunde selbst auf die im EVG gespeicherten Parametrierdaten mit einer Schnittstelle auf den Datenbus zugreift. Alternativ kann auch eine drahtlose Parametrierung über eine Near-Field-Communication, NFC, vorgesehen sein. Allerdings kann auch in diesem Fall eine kundenseitige Parametrierung erschwert oder nicht möglich sein, da das EVG in der Regel zur Abschirmung in einem Metallgehäuse verbaut ist, welchen den entsprechenden NFC-fähigen Speicherbaustein abschirmt. Die Parametrierung ist daher in der Regel nur herstellerseitig möglich.

EP 3 086 624 A1 offenbart ein Festkörperbeleuchtungsmodul, das eine Lichtquelle und eine Widerstandsschaltung umfasst, wobei ein Ausgangswiderstand der Widerstandsschaltung dazu dient, einem angeschlossenen Treiber Informationen über eine gewünschte Leistung, die an die Festkörperlichtquelle angelegt werden soll, zu übermitteln. Eine Steuerschnittstelle ist zum Empfangen von Konfigurationsinformationen von einer externen Konfigurationsvorrichtung vorgesehen; und eine Steuerschaltung konfiguriert die Widerstandsschaltung, um dadurch den Ausgangswiderstand als Reaktion auf die empfangenen Konfigurationsinformationen einzustellen. Bei diesem Ansatz wird die Konfigurationsfunktion in das Beleuchtungsmodul statt in den Treiber integriert. Der Ausgangswiderstand kann durch bestehende Treiberarchitekturen ohne Änderung bestimmt werden, während gleichzeitig die Möglichkeit des Benutzers, einzelne Beleuchtungsmodule auf seine Bedürfnisse zuzuschneiden, ermöglicht wird.

DE 10 2015 223884 A1 offenbart ein optisches Element zur Beeinflussung der Lichtabgabe von Leuchtmitteln, mit einem elektronischen Element, welches das optische Element kennzeichnet bzw. durch welches das optische Element identifizierbar ist, und einem Betriebsgerät zum Betreiben von Leuchtmitteln, denen ein optisches Element zugeordnet ist, wobei das Betriebsgerät dazu ausgebildet ist, mit dem elektronischen Element des optischen Elements verbunden zu werden, um eine Information bzgl. des optischen Elements auszulesen.

Aufgabe der vorliegenden Erfindung ist es, eine parametrierbare Leuchte bereitzustellen, welche es ermöglicht, auch kundenseitig die Parametrierdaten in der montierten Leuchte noch zu ändern.

Gelöst wird die Aufgabe durch eine Leuchte nach Anspruch 1.

Eine Besonderheit der erfindungsgemäßen Leuchte besteht in der Aufteilung und Anordnung des Microcontroller in dem EVG und des NFC-fähigen Speichermoduls in dem LED-Modul. Der Microcontroller in dem EVG ist notwendig, um das EVG entsprechend der Parametrierdaten für das eingesetzte LED-Modul zu betreiben. Von Vorteil ist, dass das NFC-fähige Speichermodul nicht direkt an dem Microcontroller im EVG vorgesehen ist, sondern in dem LED-Modul. Das LED-Modul ist im Unterschied zum EVG elektromagnetisch nicht abgeschirmt. Es muss im Gegenteil eine transparente Abdeckung aufweisen, um das Licht der LEDs (Leuchtdioden, worunter jede Art von Halbleiterlichtquellen einschließlich organischer Leuchtdioden verstanden werden) nach außen abgeben zu können. Ferner bietet die Anordnung des Speichermoduls in dem LED-Modul noch den Vorteil, dass das Speichermodul bereits werkseitig für den bestimmten LED-Modul-Typ, in welchem es verbaut ist, vorprogrammiert sein kann. Das heißt, es weist Parametrierdaten auf, welche für das jeweilige LED-Modul spezifisch sind. Dadurch kann der Microcontroller im EVG aufgrund der Daten aus dem Speichermodul des LED-Moduls den elektrischen Versorgungsstrom für den betreffenden Typ des LED-Moduls im EVG erzeugen. Da sich ferner die Übertragungsreichweite der NFC über die räumliche Ausdehnung des LED-Moduls hinaus erstreckt, ist eine problemlose Änderung der Parametrierdaten sogar kundenseitig bei montierter Leuchte noch möglich im Unterschied zu einem Speichermodul, welches im EVG verbaut ist.

Gemäß einer bevorzugten Ausführungsform ist das für NFC eingerichtete Speichermodul durch ein NFC-EEPROM gebildet. Dieser Speicherbaustein ist mehrfach wiederbeschreibbar und kann ohne Stromversorgung die zunächst werksseitig programmierten Parametrierdaten speichern. Ein Umprogrammieren ist jedoch zu einem späteren Zeitpunkt noch möglich.

Gemäß einer bevorzugten Ausführungsform ist eine direkte Verbindungsleitung zwischen dem Microcontroller im EVG und dem Speichermodul im LED-Modul gebildet, welche für einen direkten Datenaustausch eingerichtet ist. In diesem Fall greift der Microcontroller im EVG direkt über die Verbindungsleitung auf die Parametrierdaten im LED-Modul zu.

Alternativ oder zusätzlich kann auch vorgesehen sein, dass ein weiterer Microcontroller in dem LED-Modul enthalten ist, der mit dem Speichermodul verbunden ist. Die Datenverbindung zu dem Microcontroller im EVG kann dann durch eine indirekte Datenverbindung über den Microcontroller in dem LED-Modul erfolgen. Der Microcontroller im LED-Modul hat ferner den Vorteil, dass verschiedene Parametrierdaten auch direkt im LED-Modul ausgewertet werden können, um das LED-Modul zu steuern. Beispielsweise kann die Farbe der LEDs direkt im LED-Modul durch den Microcontroller im LED-Modul direkt eingestellt werden aufgrund der entsprechenden Parametrierdaten im Speichermodul.

Erfindungsgemäß weist die Leuchte mechanische Befestigungsmittel auf, die das LED-Modul austauschbar in dem Leuchtengehäuse der Leuchte halten. Das Austauschen des LED-Moduls ist bei einem Defekt erforderlich. Ferner kann auch gewünscht sein, ein LED-Modul mit einer anderen Lichtstärke oder ein LED-Modul, welches für andere Lichtfarben eingerichtet ist, in der Leuchte vorzusehen. Daher ist es von Vorteil, dass das LED-Modul unabhängig von dem EVG in der Leuchte austauschbar ist.

Gemäß einer bevorzugten Ausführungsform weist die Leuchte ferner mechanische Befestigungsmittel auf, welche, vorzugsweise ebenfalls austauschbar, das EVG in dem Leuchtengehäuse halten. Das EVG muss in der Regel nicht ausgetauscht werden, da es multifunktional für verschiedene LED-Module einsetzbar ist und entsprechend der Parametrierdaten in dem Speicher des LED-Moduls arbeitet. Allerdings kann es im Fall eines Defektes auch notwendig sein, das EVG austauschen zu müssen.

Gemäß einer bevorzugten Ausführungsform sind elektrische Steckkontakte zwischen dem Leuchtengehäuse und dem LED-Modul gebildet, um eine Versorgungsleitung für den Versorgungsstrom vom EVG zum LED-Modul zu bilden. Verschiedene LED-Module können jeweils die gleichen elektrischen Steckkontakte aufweisen, auch dann wenn LED-Module unterschiedlichen Typs angewandt werden. Dadurch ist ein einfaches Austauschen des LED-Moduls möglich. Durch die im LED-Modul gespeicherten Parametrierdaten wird das EVG auf den entsprechenden Typ des LED-Moduls eingestellt.

Gemäß einer bevorzugten Ausführungsform weist die Leuchte ferner elektrische Steckkontakte zwischen dem Leuchtengehäuse der Leuchte und dem LED-Modul auf, um eine Verbindungsleitung zwischen dem Microcontroller im EVG und dem Speichermodul im LED-Modul und/oder ggf. zwischen dem Microcontroller im EVG und dem Microcontroller im LED-Modul zu bilden. Auch diese elektrischen Steckkontakte können bei verschiedenen Typen von LED-Modulen gleich ausgebildet sein, so dass sich unterschiedliche LED-Module in der Leuchte problemlose ersetzten lassen.

Erfindungsgemäß ist das LED-Modul als geschlossenes Modul ausgebildet, welches zerstörungsfrei nicht zu öffnen ist. Diese auch als "sealed for life" bezeichneten LED-Module haben den Vorteil, dass sie technisch einfach auch für höhere Schutzklassen ausgebildet werden können. Da die LEDs eine hohe Lebenszeit aufweisen, ist ein Tauschen des LED-Moduls ohnehin nur verhältnismäßig selten notwendig. Daher ist es günstig, die LED-Module gleich als geschlossene Module auszubilden und nur als komplette Einheit zu tauschen.

Gemäß einer bevorzugten Ausführungsform ist das Speichermodul zum Speichern folgender Parametrierdaten eingerichtet: eine Lichtmenge pro zugeführter Energiemenge, insbesondere eine Funktion des Lichtstroms, welche das LED-Modul bereitstellt, gegenüber dem elektrischen Versorgungsstrom; eine thermische Kenngröße, insbesondere einen thermischen Widerstand des LED-Moduls; eine Lichtfarbe des LED-Moduls; Alterungsdaten des LED-Moduls, insbesondere eine Lichtstromdegradierung in Abhängigkeit der Betriebsdauer und/oder der Betriebstemperatur des LED-Moduls; und/oder eine eindeutige Kennung des LED-Moduls. Diese Daten erlauben den Betrieb eines LED-Moduls mit einem universellen EVG, wobei der Versorgungsstrom für das LED-Modul aus den Parametrierdaten ermittelt werden kann. Beispielsweise kann der Microcontroller im EVG anhand von gegebenen Größen, der Energiemenge für eine gewünschte Lichtmenge zur Dimmung der Leuchte, die maximal zu tolerierende Erwärmung des LED-Moduls und den Ausgleich von einer Lichtstromdegradierung beim Altern des LED-Moduls berücksichtigen. Ferner kann der Microcontroller im EVG aus der Kennnummer des LED-Moduls den Typ des LED-Moduls ermitteln, um den für das betreffende LED-Modul nötigen Versorgungsstrom bereitzustellen. Weitere Parametrierdaten, z.B. die Lichtfarbe des LED-Moduls, können direkt von dem Microcontroller im LED-Modul ausgewertet werden, um das LED-Modul entsprechend einzustellen. Durch die Möglichkeit, die Parametrierdaten in dem NFC-fähigen Speichermodul auch noch kundenseitig an der Leuchte umzuändern, kann beispielsweise die Lichtfarbe umgestellt werden oder die gewünschte Lichtmenge eingestellt werden.

Weitere Merkmale und Vorteile der vorliegenden Erfindung werden aus der nachfolgenden Beschreibung einer bevorzugten Ausführungsform deutlich, die in Verbindung mit der beigefügten Figur gegeben wird.

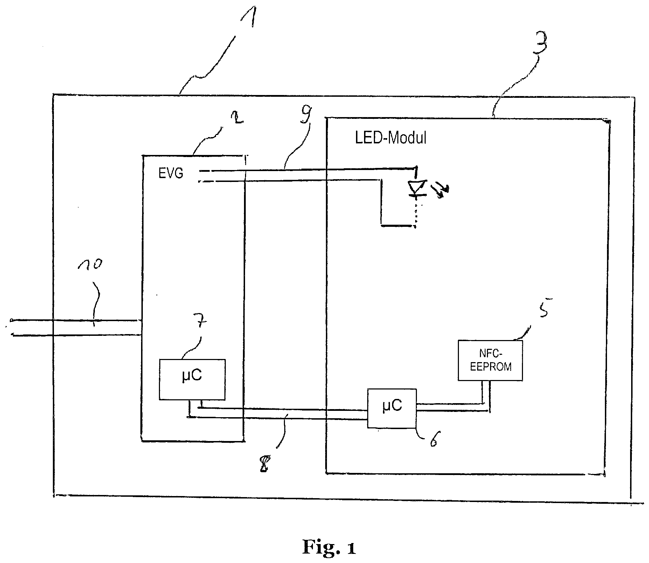

- Die Figur 1: zeigt eine schematische Ansicht einer Leuchte mit einem LED-Modul und einem EVG gemäß einer Ausführungsform der Erfindung.

Bezugnehmend auf die Figur 1 ist eine Leuchte 1 dargestellt, welche ein EVG 2 und ein LED-Modul 3 aufnimmt. Die Leuchte 1 umfasst ein Gehäuse mit mechanischen Befestigungsmitteln (in der Figur nicht dargestellt) durch welche das EVG 2 und das LED-Modul 3 in dem Leuchtengehäuse gehalten werden. Wenigstens das LED-Modul ist so angeordnet, dass es eine Lichtaustrittsfläche der Leuchte definiert.

In dem LED-Modul 3 ist eine Kette von mehreren LEDs vorgesehen, die als Leuchtmittel in der Leuchte dienen. Die LEDs werden über eine Versorgungsleitung 9 mit einem Versorgungsstrom von dem EVG 2 betrieben.

Ferner ist in dem LED-Modul ein NFC-EEPROM 5 angeordnet, welches mit einem Microcontroller 6 im LED-Modul 3 verbunden ist. Der Microcontroller 6 ist mit einem Microcontroller 7 in dem EVG 2 über eine Kommunikationsleitung 8 verbunden. Dabei ist zu verstehen, dass die Kommunikationsleitung 8 ebenso wie die Versorgungsleitung 9 teilweise durch elektrische Steckkontakte gebildet ist, so dass ein Austauschen des LED-Moduls unabhängig von dem EVG 2 und ggf. ein Austauschen des EVGs unabhängig von dem LED-Modul 3 problemlos möglich ist.

Ferner ist das EVG mit einer Netzversorgungsleitung 10 durch die Leuchte verbunden.

Im Betrieb der Leuchte liest der Microcontroller 7 im EVG 2 die Daten des NFC-EEPROMS 5 über den Microcontroller 6 im LED-Modul aus, um unter Verwendung dieser Daten die für den Betrieb der LEDs im LED-Modul 3 notwendigen Versorgungsstrom zu ermitteln. Der Versorgungsstrom wird über die Versorgungsleitung 9 an die LEDs 5 übertragen.

Das EVG kann daher durch den Microcontroller 7 die notwendigen Parametrierdaten aus dem NFC-EEPROM 5 auslesen.

Da das EEPROM NFC-fähig ist können die Daten in dem EEPROM auch beschrieben werden. Dies kann von außen erfolgen, da gemäß der Erfindung das NFC-EEPROM 5 in dem LED-Modul 3 angebracht ist, so dass es elektromagnetisch nicht abgeschirmt wird. Das LED-Modul 3 weist ohnehin eine transparente Abdeckung auf, so dass eine drahtlose Kommunikation zu dem NFC-EEPROM 5 von außen über die Lichtaustrittsfläche der Leuchte möglich ist.

Das LED-Modul 3 weist ferner optional dem Microcontroller 6 auf, welcher bereits Parametrierdaten aus dem NFC-EEPROM auslesen kann und zur Steuerung von Funktionen innerhalb des LED-Moduls 3 verwenden kann. Beispielsweise können die Lichtfarbe oder die Anzahl von LEDs, welche mit elektrischem Strom versorgt werden, direkt in dem LED-Modul eingestellt werden. Im Übrigen dient der Microcontroller 6 im LED-Modul 3 zur Verbindung mit dem Microcontroller 7 im EVG 2. Alternativ kann der Microcontroller 7 im EVG 2 auch direkt mit dem NFC-EEPROM 5 im LED-Modul 3 verbunden sein.

Die Leuchte bietet daher die Möglichkeit, über den gesamten Lebenszyklus parametrierbar zu sein, ohne dass die Leuchte demontiert werden muss. Insbesondere ist das Öffnen der Leuchte nicht mehr nötig, so dass auch der Kunde keine Garantieansprüche verliert, weil die Leuchte innerhalb der Garantiezeit nicht geöffnet werden muss, auch wenn die Parametrierung geändert werden soll. Die Leuchte ist ferner parametrierbar obwohl das LED-Modul 3 zerstörungsfrei nicht geöffnet werden kann.

Das NFC-EEPROM 5 ggf. in Verbindung mit dem Microcontroller 7 im LED-Modul 3 ermöglicht einen Einsatz verschiedener Typen von LED-Modulen in der Leuchte mit dem jeweils gleichen EVG in der Art einer Plug-and-Play-Schnittstelle, weil die notwendigen Eigenschaften zum Betrieb des betreffenden Typs des LED-Moduls alle bereits auf dem NFC-EEPROM 5 vorgespeichert sind.

Die charakteristischen Daten des LED-Moduls 3 können durch Messungen mit dem Microcontroller 6 im LED-Modul 3 verifiziert und ebenfalls aktualisiert werden. Die Verwendung einer NFC-Kommunikation hat ferner den Vorteil im Vergleich zu anderen parametrierbaren System, z.B. durch WLAN, Bluetooth oder Zigbee, dass zunächst eine räumliche Distanz zu dem LED-Modul überwunden werden muss, um die Parametrierung vorzunehmen. Dadurch ist die Datensicherheit besser gewährleistet im Vergleich zu Lösungen bei welcher die Daten der Leuchte über eine größere Reichweite geändert werden können. Abgesehen davon ist ein NFC-fähiges Speichermodul kostengünstiger zu realisieren als ein Speichermodul, welches an ein Funksystem mit größerer Reichweite angeschlossen ist.

Modifikationen der vorhergehend beschriebenen Merkmale der Leuchte können im Rahmen der Erfindung, welche durch die Ansprüche definiert ist, vorgenommen werden. Beispielsweise können auch mehrere LED-Module innerhalb einer Leuchte mit einem oder mehreren EVGs betrieben werden. Es ist auch möglich, unterschiedliche LED-Module in einer Leuchte zu kombinieren. Vorzugsweise enthält jedes LED-Modul sein eigenes NFC-fähiges Speichermodul, so dass für jedes LED-Modul die Parametrierung individuell geändert werden kann.

### BEZUGSZEICHENLISTE

- 1: Leuchte
- 2: EVG
- 3: LED-Modul
- 5: NFC-fähiges Speichermodul, insbesondere NFC-EEPROM
- 6: Microcontroller
- 7: Microcontroller
- 8: Kommunikationsleitung
- 9: Versorgungsleitung
- 10: Netzversorgungsleitung

## Patentansprüche

1. Leuchte (1) mit einem LED-Modul (3) und einem elektronischen Vorschaltgerät, EVG (2), welches in einem Leuchtengehäuse der Leuchte separat von dem LED-Modul ausgebildet ist und einen Versorgungsstrom für das LED-Modul bereitstellt, wobei ein Microcontroller (7) in dem EVG (2) und ein Speichermodul (5) in dem LED-Modul (3) zum Speichern von Parametrierdaten vorgesehen sind, und das Speichermodul (5) für Near-Field-Communication, NFC, zum Ändern der Parametrierdaten eingerichtet ist,
wobei das Speichermodul (5) in dem LED-Modul (3) mit dem Microcontroller (7) in dem EVG (2) für einen direkten oder indirekten Datenaustausch in Verbindung steht und die Übertragungsreichweite der NFC sich über die räumliche Ausdehnung des LED-Moduls (3) hinaus erstreckt,
**dadurch gekennzeichnet, dass**
die Leuchte mechanische Befestigungsmittel aufweist, die das LED-Modul (3) austauschbar in dem Leuchtengehäuse der Leuchte (1) halten,
wobei das LED-Modul (3) als geschlossenes Modul ausgebildet ist, welches zerstörungsfrei nicht zu öffnen ist.

2. Leuchte (1) nach Anspruch 1, wobei das für NFC eingerichtete Speichermodul (7) durch ein NFC-EEPROM (7) gebildet ist.

3. Leuchte nach einem der vorhergehenden Ansprüche, wobei eine direkte Verbindungsleitung zwischen dem Microcontroller (7) im EVG (2) und dem Speichermodul (5) im LED-Modul (3) gebildet ist, welche für den direkten Datenaustausch eingerichtet ist.

4. Leuchte (1) nach einem der Ansprüche 1 oder 2, wobei noch ein weiterer Microcontroller (6) in dem LED-Modul (3) vorgesehen ist, der mit dem Speichermodul (5) verbunden ist.

5. Leuchte (1) nach Anspruch 4, wobei die Leuchte (1) eine Verbindungsleitung (8) vom dem Microcontroller (7) in dem EVG (2) zu dem Microcontroller (6) im LED-Modul (3) aufweist, welche für einen Datenaustausch eingerichtet ist, und den indirekten Datenaustausch zwischen dem Speichermodul (5) im LED-Modul (3) über den Microcontroller (6) im LED-Modul (3) zu dem Microcontroller (7) im EVG (2) ermöglicht.

6. Leuchte nach einem der vorhergehenden Ansprüche, welche mechanische Befestigungsmittel aufweist, die das EVG (2), vorzugsweise austauschbar, in dem Leuchtengehäuse der Leuchte (1) halten.

7. Leuchte nach einem der vorhergehenden Ansprüche, wobei elektrische Steckkontakte zwischen dem Leuchtengehäuse und dem LED-Modul (3) gebildet sind, um eine Versorgungsleitung (9) für den Versorgungsstrom vom EVG (2) zum LED-Modul (3) zu bilden.

8. Leuchte nach einem der vorhergehenden Ansprüche, wobei elektrische Steckkontakte zwischen dem Leuchtengehäuse der Leuchte (1) und dem LED-Modul (3) gebildet sind, um eine bzw. die Verbindungsleitung (8) zwischen dem Microcontroller (7) im EVG (2) und dem Speichermodul (5) im LED-Modul (3), und bei Rückbezug auf Anspruch 4 oder 5 zwischen dem Microcontroller (7) im EVG (2) und dem Microcontroller (6) im LED-Modul (3), zu bilden.

9. Leuchte nach einem der vorhergehenden Ansprüche, wobei das Speichermodul (3) zum Speichern folgender Parametrierdaten eingerichtet ist:
eine Lichtmenge pro zugeführter Energiemenge, insbesondere eine Funktion des Lichtstroms, welches das LED-Modul (3) bereitstellt, gegenüber dem elektrischen Versorgungsstrom;
eine thermische Kenngröße, insbesondere einen thermischen Widerstand des LED-Moduls (3);
eine Lichtfarbe des LED-Moduls (3);
Alterungsdaten des LED-Moduls (3), insbesondere eine Lichtstromdegradierung in Abhängigkeit der Betriebsdauer und/oder der Betriebstemperatur des LED-Moduls; und/oder eine eindeutige Kennnummer des LED-Moduls (3).

## Claims

1. Luminaire (1) with an LED module (3) and an electronic ballast, ECG (2), which is formed in a luminaire housing of the luminaire separately from the LED module and provides a supply current for the LED module, wherein a microcontroller (7) in the ECG (2) and a memory module (5) in the LED module (3) are provided for storing parameterization data, and the memory module (5) is set up for near-field communication, NFC, for changing the parameterization data,
wherein the memory module (5) in the LED module (3) is connected to the microcontroller (7) in the ECG (2) for direct or indirect data exchange and the transmission range of the NFC extends beyond the spatial extent of the LED module (3), **characterized in that** the luminaire has mechanical fastening means which hold the LED module (3) replaceably in the luminaire housing of the luminaire (1), wherein the LED module (3) is designed as a closed module which cannot be opened in a non-destructive manner.

2. Luminaire (1) according to claim 1, wherein the memory module (7) set up for NFC is formed by an NFC EEPROM (7).

3. Luminaire according to any of the preceding claims, wherein a direct connection line is formed between the microcontroller (7) in the ECG (2) and the memory module (5) in the LED module (3), which is set up for direct data exchange.

4. Luminaire (1) according to one of the claims 1 or 2, wherein a further microcontroller (6) is provided in the LED module (3), which is connected to the memory module (5).

5. Luminaire (1) according to claim 4, wherein the luminaire (1) has a connection line (8) from the microcontroller (7) in the ECG (2) to the microcontroller (6) in the LED module (3), which is configured for data exchange and enables indirect data exchange between the memory module (5) in the LED module (3) via the microcontroller (6) in the LED module (3) to the microcontroller (7) in the ECG (2).

6. Luminaire according to any one of the preceding claims, which has mechanical fastening means which hold the ECG (2), preferably replaceably, in the luminaire housing of the luminaire (1).

7. Luminaire according to any one of the preceding claims, wherein electrical plug contacts are formed between the luminaire housing and the LED module (3) to form a supply line (9) for the supply current from the ECG (2) to the LED module (3).

8. Luminaire according to any one of the preceding claims, wherein electrical plug contacts are formed between the luminaire housing of the luminaire (1) and the LED module (3) to form a or the connecting line (8) between the microcontroller (7) in the ECG (2) and the memory module (5) in the LED module (3), and with reference back to claim 4 or 5 between the microcontroller (7) in the ECG (2) and the microcontroller (6) in the LED module (3).

9. Luminaire according to any of the preceding claims, wherein the memory module (3) is arranged to store the following parameterization data:
a quantity of light per supplied quantity of energy, in particular a function of the luminous flux provided by the LED module (3), with respect to the electrical supply current;
a thermal parameter, in particular a thermal resistance of the LED module (3);
a light color of the LED module (3);
aging data of the LED module (3), in particular a luminous flux degradation as a function of the operating time and/or the operating temperature of the LED module; and/or
a unique identification number of the LED module (3).

## Revendications

1. Luminaire (1) avec un module à LED (3) et un ballast électronique EVG (2), qui est disposé dans un boîtier du luminaire séparément du module à LED et qui met à disposition un courant d'alimentation pour le module à LED, dans lequel un micro-contrôleur (7) est prévu dans l'EVG (2) et un module de mémoire (5) est disposé dans le module à LED (3) pour l'enregistrement de données de paramétrage et le module de mémoire (5) est conçu pour une communication en champ proche, NFC, pour la modification des données de paramétrage,
dans lequel le module de mémoire (5) dans le module de mémoire (3) est en liaison avec le micro-contrôleur (7) dans l'EVG (2) pour un échange de données direct ou indirect et la portée de la transmission de la NFC s'étend au-delà de l'extension dans l'espace du module à LED (3),
**caractérisé en ce que**
le luminaire comprend des moyens de fixation mécaniques qui maintiennent le module à LED (3) de manière interchangeable dans le boîtier du luminaire (1) ;
dans lequel le module à LED (3) est conçu comme un module fermé qui ne peut pas être ouvert sans être détruit.

2. Luminaire (1) selon la revendication 1, dans lequel le module de mémoire (7) conçu pour la NFC est constitué d'une EEPROM de NFC (7).

3. Luminaire selon l'une des revendications précédentes, dans lequel une conduite de liaison directe est prévue entre le micro-contrôleur (7) dans l'EVG (2) et le module de mémoire (5) dans le module à LED (3), qui est conçue pour l'échange direct de données.

4. Luminaire (1) selon l'une des revendications 1 ou 2, dans lequel un autre micro-contrôleur (6) est prévu dans le module à LED (3), qui est relié avec le module de mémoire (5).

5. Luminaire (1) selon la revendication 4, dans lequel le luminaire (1) comprend une conduite de liaison (8) du micro-contrôleur (7) dans l'EVG (2) vers le micro-contrôleur (6) dans le module à LED (3), qui est conçue pour un échange de données et qui permet l'échange direct de données entre le module de mémoire (5) dans le module à LED (3) par l'intermédiaire du micro-contrôleur (6) dans le module à LED (3) vers le micro-contrôleur (7) dans l'EVG (2).

6. Luminaire selon l'une des revendications précédentes, qui comprend des moyens de fixation mécaniques qui maintiennent l'EVG (2), de préférence interchangeable, dans le boîtier du luminaire (1).

7. Luminaire selon l'une des revendications précédentes, dans lequel des contacts enfichables électriques sont prévus entre le boîtier du luminaire et le module à LED (3), afin de former une conduite de liaison (9) pour le courant d'alimentation de l'EVG (2) vers le module à LED (3).

8. Luminaire selon l'une des revendications précédentes, dans lequel des contacts enfichables électriques sont prévus entre le boîtier du luminaire (1) et le module à LED (3), afin de former une respectivement la conduite de liaison (8) entre le micro-contrôleur (7) dans l'EVG (2) et le module de mémoire (5) dans le module à LED (3), et, en référence à la revendication 4 ou 5, entre le micro-contrôleur (7) dans l'EVG (2) et le micro-contrôleur (6) dans le module à LED (3).

9. Luminaire selon l'une des revendications précédentes, dans lequel le module de mémoire (3) est conçu pour l'enregistrement des données de paramétrage suivantes :
une quantité de lumière par quantité d'énergie introduite, plus particulièrement une fonction du flux lumineux que le module à LED (3) met à disposition, par rapport auy courant électrique d'alimentation ;
une grandeur thermique caractéristique, plus particulièrement une résistance thermique du module à LED (3) ;
une couleur de lumière du module à LED (3) ;
des données de vieillissement du module à LED (3), plus particulièrement une gradation du flux lumineux en fonction de la durée de fonctionnement et/ou de la température de service du module à LED ; et/ou
un numéro d'identification unique du module à LED (3).
